# EUROPEAN PATENT APPLICATION

(11) **EP 1 130 902 A1**
(43) Date of publication of application: **05.09.2001**
(21) Application number: 01102720.8
(22) Date of filing: 06.02.2001
(51) Int. Cl.: H04N 5/225, G08B 15/00

(54) **Enclosure for closed-circuit television cameras**

(30) Priority: 22.02.2000 IT PD000011 U
(71) Applicant: TEKNO SYSTEM S.R.L., I-36010 CARRE' (VICENZA) (IT)
(72) Inventor: Marchesini, Renzo, 36015 Schio (Vicenza) (IT)
(74) Representative: Modiano, Guido, Dr.-Ing.

(57) **Abstract**

An enclosure (10) for closed-circuit television cameras comprising a box-like composite body (11) which is closed on a working side by a wall (12) which comprises a transparent plate (13) supported by a frame (14) which is fixed to the body, an opposite side being closed by a removable cover (15) which allows insertion of a television camera; the frame forms a seat (16) for the plate (13) with an abutment surface (17) which is directed outward so as to allow assembly of the plate (13) from the outside inward.

## Description

The present invention relates to an enclosure which is particularly but not exclusively useful for closed-circuit television cameras.

It is known that closed-circuit television cameras arranged in the most disparate types of public and private premises are increasingly used, typically with surveillance functions.

It is known that in order to allow the television camera to operate correctly it is important that its lens remain perfectly intact and clean; for this purpose, enclosures are usually provided whose structure protects the television camera.

Such enclosures of course have, on their front working part, transparent plates in order to allow correct and effective vision of the television camera.

Currently, the structure of commercially available enclosures for television cameras provides for a composite box-like body closed on the working side by a wall comprising a transparent plate supported by a frame which is fixed to the body: on the opposite side, the body proper is instead closed by a removable cover which allows to insert said television camera.

Such enclosures are usually shaped so as to form a seat for the plate with an abutment surface which faces inward, so that the plate in practice is operatively fitted from the inside outward by pushing it against the abutment surface.

However, it has been found that this solution allows the transparent plate to move inward if it is pushed accidentally or intentionally, and its separation inevitably makes it fall onto the television camera, preventing its correct operation and damaging it in the worst cases.

Furthermore, commercially available enclosures are scarcely suitable for accommodating television cameras which generate considerable heat, since the heat in practice is dissipated by natural convection, which is often insufficient.

The aim of the present invention is to provide an enclosure for closed-circuit television cameras whose structure solves the drawbacks noted above in known types, particularly ensuring that the transparent plate in no circumstance falls onto the television camera if it is pushed or otherwise actuated and does not constitute an obstacle for said television camera during subsequent operation even in case of separation.

Within the scope of this aim, an important object of the present invention is to provide an enclosure whose structure is solid and highly functional and ensures correct operation even for television cameras which generate considerable heat during operation.

Another object of the present invention is to provide an enclosure whose structure allows easy assembly and disassembly of the television camera and can be adapted substantially to any operating condition.

Another object of the present invention is to provide an enclosure whose structure also allows aesthetically pleasing embodiments.

Another object of the present invention is to provide an enclosure whose structure can be manufactured with conventional technologies and equipment.

This aim and these and other objects which will become better apparent hereinafter are achieved by an enclosure for closed-circuit television cameras comprising a box-like composite body closed on a working side by a wall which comprises a transparent plate supported by a frame which is fixed to said body, an opposite side with respect to the working side being closed by a removable cover which allows insertion of said television camera, characterized in that said frame forms a seat for said plate with an abutment surface which is directed outward so as to allow assembly of said plate from the outside inward.

Further characteristics and advantages of the present invention will become better apparent from the description of an embodiment thereof, illustrated only by way of non-limitative example in the accompanying drawing, wherein:
Fig. 1 is a perspective view of an enclosure for closed-circuit television cameras having the structure according to the present invention;
Fig. 2 is a sectional view of the enclosure of Figure 1.

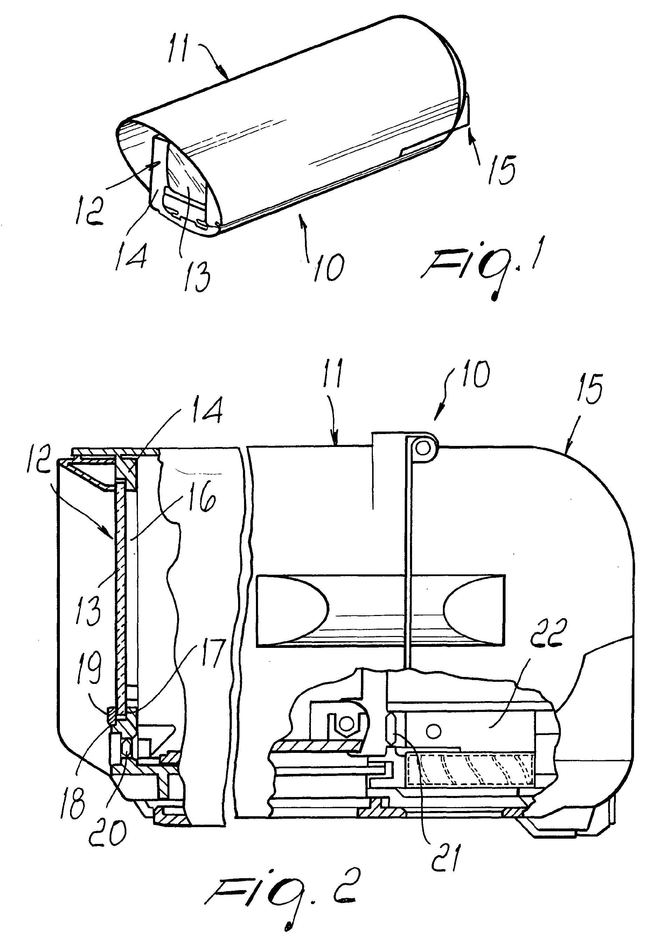

With particular reference to Figures 1 and 2, an enclosure for closed-circuit television cameras having the structure according to the invention is generally designated by the reference numeral 10.

In particular, the enclosure 10 is constituted by a body made of plastics, generally designated by the reference numeral 11, which is box-like and composite and is closed on a working side by a wall 12 which comprises a transparent plate 13 supported by a frame 14 which is fixed to the body 11.

An opposite side, with respect to said working side, is closed by a removable cover 15 (hinged to the body 11) which allows to insert a television camera, not shown.

In particular, the frame 14 forms a seat 16 for the plate 13, with an abutment surface 17 which is directed outward so as to allow to fit said plate 13 from the outside inward.

In particular, in this embodiment the seat 16 has a rim which is shaped so as to form a double step with the substantially median abutment surface 17 for the plate 13, while the outermost surface 18 is designed for the abutment of a gasket 19 which is associated with the plate 13.

The enclosure 10 comprises, at the frame 14 and at the cover 15, respectively a first prefracture 20 and a second prefracture 21 which allow the operator to break out the corresponding wall portions so as to form a corresponding number of passages for an air stream.

In particular, a recess 22 is provided in the cover 15 at the second prefracture 21 and allows to accommodate ventilation means which are not shown in the figures and are known per se.

In particular, the ventilation means can be constituted for example by an axial fan with a delivery which is coaxial to the perimeter of the second prefracture 21.

In practice it has been found that the present invention has solved the drawbacks suffered by known enclosures; in particular, it is noted that the structure according to the invention, by accommodating and supporting the transparent plate with an abutment surface which is directed outward, prevents the plate from detaching if it is pushed from the outside inward.

Furthermore, the possibility to open intake passages associated with ventilation means when the operator finds this necessary allows to accommodate television cameras which generate considerable heat due to their constructive features.

Furthermore, it is noted that the structure according to the invention solves the above cited problems without introducing particular constructive complications, since the box-like body can be manufactured by molding plastics, and without limiting the overall flexibility of application of the shell.

It should also be observed that the structure according to the invention allows to provide enclosures which also have good aesthetic qualities and thus can be placed in environments in which this characteristic is particularly important.

The materials and the dimensions may be any according to requirements.

The disclosures in Italian Utility Model Application No. PD2000U000011 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An enclosure (10) for closed-circuit television cameras comprising a box-like composite body (11) closed on a working side by a wall (12) which comprises a transparent plate (13) supported by a frame (14) which is fixed to said body, an opposite side, with respect to said working side, being closed by a removable cover (15) which allows insertion of a television camera, characterized in that said frame forms a seat (16) for said plate (13) with an abutment surface (17) which is directed outward so as to allow assembly of said plate (13) from the outside inward.

2. The enclosure according to claim 1, characterized in that said seat has a rim which is shaped so as to form a double step with a median outer surface for the abutment of said plate, an outermost surface of said rim acting as abutment for a gasket which is associated with said plate.

3. An enclosure for closed-circuit television cameras comprising a box-like composite body closed on a working side by a wall which comprises a transparent plate supported by a frame which is fixed to said body, an opposite side, with respect to said working side, being closed by a removable cover which allows insertion of a television camera, characterized in that it comprises, at said frame and said cover, respectively a first prefracture and a second prefracture which allow an operator to break out corresponding wall portions so as to form a corresponding number of passages for an air stream, a recess for accommodating ventilation means being provided in said rear cover.

4. The enclosure according to claim 3, characterized in that said ventilation means comprise an axial fan which has a delivery which corresponds coaxially to a perimeter of said second prefracture.
